# FASCICULE DE BREVET EUROPEEN

(11) **EP 4 010 566 B1**
(45) Date de publication et mention de la délivrance du brevet: **06.03.2024**
(21) Numéro de dépôt: 20737025.5
(22) Date de dépôt: 10.07.2020
(51) Int. Cl.: F01D 25/24

(54) **COMPRESSEUR DE TURBOMOTEUR D'AÉRONEF COMPRENANT UN DISPOSITIF DE BLOCAGE D'UN ANNEAU DE RETENUE**
TURBINENTRIEBWERKSVERDICHTER FÜR FLUGZEUGE MIT EINER VORRICHTUNG ZUM FIXIEREN EINES HALTERINGES
AIRCRAFT TURBOSHAFT ENGINE COMPRESSOR COMPRISING A DEVICE FOR IMMOBILISING A RETAINING RING

(30) Priorité: 06.08.2019 FR 1908992
(43) Date de publication de la demande: 15.06.2022
(73) Titulaire: SAFRAN AIRCRAFT ENGINES, 75015 Paris (FR)
(72) Inventeur: DELAHAYE, Thomas, Nolwenn, Emmanuel, 77550 MOISSY-CRAMAYEL (FR); BERGON, Blaise, 77550 MOISSY-CRAMAYEL (FR); JABLONSKI, Laurent, 77550 MOISSY-CRAMAYEL (FR); DUMAS, Lilian, Yann, 77550 MOISSY-CRAMAYEL (FR); VAN DE KERCKHOVE, Thomas, Etienne, Camille, Marie, 77550 MOISSY-CRAMAYEL (FR); ROBIN, Noël, Joseph, Camille, 77550 MOISSY-CRAMAYEL (FR); SEVI, Guillaume, 77550 MOISSY-CRAMAYEL (FR)
(74) Mandataire: Argyma
(86) Numéro de dépôt international: PCT/EP2020/069474
(87) Numéro de publication internationale: WO 2021/023470

(56) Documents cités:
- EP-A2- 1 998 006
- EP-A2- 2 372 097
- EP-A2- 2 412 923
- WO-A1-2014/052800

## Description

### DOMAINE TECHNIQUE DE L'INVENTION

La présente invention concerne le domaine des turbomoteurs d'aéronef à double flux et vise plus particulièrement un compresseur de turbomoteur d'aéronef ayant une résistance améliorée à l'ingestion de corps étrangers.

### ETAT DE LA TECHNIQUE

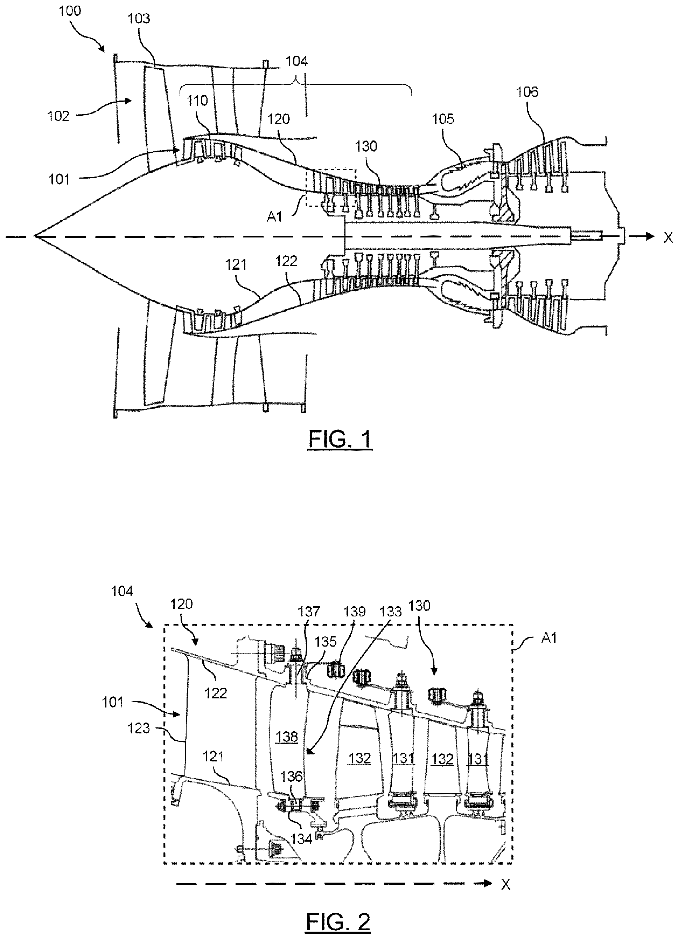

De manière connue, en référence à la figure 1, un turbomoteur 100 d'aéronef s'étend selon un axe longitudinal X et permet de propulser un aéronef à partir de l'accélération d'un flux d'air entrant dans le turbomoteur 100 et circulant d'amont en aval. Par la suite, les termes « amont » et « aval » sont définis par rapport à l'axe longitudinal X orienté d'amont en aval. De même, les termes « intérieur » et « extérieur » sont définis selon la direction radiale par rapport à l'axe longitudinal X.

De manière connue, en référence à la figure 1, un turbomoteur 100 d'aéronef à double flux comprend une veine primaire 101 radialement intérieure dans laquelle circule une première partie du flux d'air entrant, dite flux d'air primaire, et une veine secondaire 102 radialement extérieure dans laquelle circule une seconde partie du flux d'air entrant, dite flux d'air secondaire.

De manière connue, en référence à la figure 1, un tel turbomoteur 100 comprend d'amont en aval une entrée d'air comprenant une soufflante 103 pour diriger le flux d'air entrant vers la veine primaire 101 et la veine secondaire 102, un compresseur 104 pour compresser le flux d'air primaire, une chambre de combustion 105 et une turbine 106.

De manière connue, en référence à la figure 1, le compresseur 104 comprend un compresseur basse pression 110 situé à l'amont, un compresseur haute pression 130 situé à l'aval et un carter intermédiaire 120 reliant axialement le compresseur basse pression 110 et le compresseur haute pression 130.

En pratique, en référence à la figure 2 représentant une vue rapprochée A1 de la figure 1, le carter intermédiaire 120 comprend une virole intérieure 121 délimitant intérieurement la veine primaire 101, une virole extérieure 122 délimitant extérieurement la veine primaire 101 et des bras de support 123 s'étendant entre la virole intérieure 121 et la virole extérieure 122.

Toujours en référence à la figure 2, le compresseur haute pression 130 comprend une alternance de stators 131, également nommés redresseurs, et de rotors 132 montés axialement selon l'axe X pour respectivement guider et accélérer le flux d'air primaire. De manière connue, le stator situé le plus à l'amont du compresseur haute pression 130 est dénommé « roue directrice d'entrée 133 » et est connu de l'homme du métier sous son abréviation « RDE ». Le compresseur haute pression 130 comporte en outre un carter extérieur 135 délimitant extérieurement la veine primaire 101.

De manière connue, en référence à la figure 2, la roue directrice d'entrée 133 comprend un anneau de retenue 134 d'axe X délimitant intérieurement la veine primaire 101 et une pluralité d'aubes 138 montées entre l'anneau de retenue 134 et le carter extérieur 135 du compresseur haute pression 130. En pratique, l'anneau de retenue 134 et le carter extérieur 135 comprennent respectivement une pluralité d'alvéoles intérieures 136 et une pluralité d'alvéoles extérieures 137, formées respectivement à leur périphérie extérieure, pour le montage des aubes 138. Dans cet exemple, la roue directrice d'entrée 133 comprend un système de calage des aubes 139 permettant d'adapter l'orientation des aubes 138 en fonction des conditions de vol. Un tel carter intermédiaire 120 et un tel compresseur haute pression 130 sont par exemple connus par le brevet FR2936560B1 ou par le document EP1998006A2.

Dans les faits, lors du vol de l'aéronef, particulièrement lors des phases de décollage et d'atterrissage, la soufflante 103 génère un phénomène d'aspiration susceptible de provoquer l'ingestion de corps étrangers, notamment d'oiseaux, dans le compresseur 104. Une telle ingestion est susceptible de générer un moment mécanique autour de l'axe X sur la roue directrice d'entrée 133, ce qui peut endommager les aubes 138 de la roue directrice d'entrée 133, et dans certains cas conduire à un dysfonctionnement du turbomoteur 100.

Pour éviter ce phénomène, il est connu dans l'art antérieur de monter de manière fixe, à la manière d'un encastrement, la roue directrice d'entrée 133 sur le carter intermédiaire 120. Autrement dit, la roue directrice d'entrée 133 ne peut pas se déplacer radialement, tangentiellement et axialement par rapport au carter intermédiaire 120.

Cette solution, si elle est efficace, crée toutefois une liaison hyperstatique entre le carter intermédiaire 120 et la roue directrice d'entrée 133, à l'origine de frottements et donc d'une usure prématurée entre le carter intermédiaire 120 et la roue directrice d'entrée 133. Pour éviter ces frottements, une solution consiste à augmenter les jeux de montage mais cela affecte les performances du turbomoteur 100. En outre, cette solution complexifie le démontage du compresseur haute pression 104 dans le cas d'une maintenance ainsi que le réglage du système de calage des aubes 139.

L'invention vise ainsi à empêcher l'endommagement des aubes de la roue directrice d'entrée lors de l'ingestion de corps étrangers, sans réduire les performances du turbomoteur et sans modifier la structure globale de la roue directrice d'entrée et du carter intermédiaire.

On connait par la demande de brevet EP1998006A2 un mécanisme d'étanchéité permettant de relier le carter intermédiaire et la roue directrice d'entrée du compresseur haute pression d'un turbomoteur d'aéronef. WO2014052800 A1 concerne un ensemble de stator d'un turbomoteur d'aéronef comprenant un système de blocage des plateformes extérieures des aubes de stator par rapport au carter. EP2372097 A2 concerne une turbine de turbomoteur d'aéronef comprenant un support radialement intérieur sur lequel sont montés des secteurs de stator comprenant une plateforme intérieure et une plateforme extérieure reliées par des aubes radiales.

### PRESENTATION DE L'INVENTION

A cet effet, l'invention concerne un compresseur de turbomoteur d'aéronef à double flux s'étendant longitudinalement selon un axe X orienté de l'amont vers l'aval, ledit compresseur comprenant un compresseur basse pression situé en amont, un compresseur haute pression situé en aval et un carter intermédiaire reliant axialement le compresseur basse pression et le compresseur haute pression, ledit compresseur comprenant une veine primaire dans laquelle circule d'amont en aval un flux d'air primaire accéléré par ledit compresseur, ledit compresseur haute pression comprenant une roue directrice d'entrée comprenant un anneau de retenue délimitant intérieurement la veine primaire, un carter extérieur de compresseur haute pression délimitant extérieurement ladite veine primaire et une pluralité d'aubes s'étendant dans ladite veine primaire entre l'anneau de retenue et le carter extérieur de compresseur haute pression,

L'invention est remarquable en ce que le compresseur comprend un dispositif de blocage comprenant au moins un premier organe solidaire du carter intermédiaire et au moins un deuxième organe solidaire de l'anneau de retenue et configuré pour coopérer avec le premier organe afin de bloquer un déplacement tangentiel de l'anneau de retenue par rapport au carter intermédiaire selon l'axe X tout en autorisant un déplacement axial et un déplacement radial dudit anneau de retenue par rapport audit carter intermédiaire selon l'axe X.

Grâce à l'invention, en cas d'ingestion d'un corps étranger, l'anneau de retenue est avantageusement protégé contre tout mouvement tangentiel, ce qui évite toute perte d'aubes de la roue directrice d'entrée. Le carter intermédiaire est un élément robuste qui est avantageusement apte à résister à un effort tangentiel reçu par l'anneau de retenue. De plus, un tel dispositif de blocage autorise un déplacement axial et un déplacement radial de l'anneau de retenue par rapport au carter intermédiaire, ce qui évite tout hyperstatisme et les pertes de performance associées. En outre, une dilatation radiale de l'anneau de retenue demeure possible sous l'effet de la chaleur. Grâce à l'invention, le turbomoteur possède des performances optimales et une résistance améliorée lors de l'ingestion d'un corps étranger.

De manière préférée, le carter intermédiaire comprenant une virole intérieure délimitant intérieurement la veine primaire et une virole extérieure délimitant extérieurement ladite veine primaire et reliée au carter extérieur de compresseur haute pression. Le premier organe est solidaire de la virole intérieure, en particulier, d'une partie aval de la virole intérieure.

De manière avantageuse, cela permet au premier organe de s'étendre à proximité de l'anneau de retenue, ce qui limite ses dimensions et sa masse. En outre, la virole intérieure est un élément robuste qui est avantageusement apte à résister à un effort tangentiel reçu par l'anneau de retenue.

De manière préférée, le premier organe s'étend axialement en saillie vers l'aval. Un tel premier organe permet un blocage tangentiel tout en laissant une liberté axiale et radiale. Un tel premier organe possède en outre une conception simple, ce qui limite sa masse et son encombrement.

Selon un aspect de l'invention, le deuxième organe se présente sous la forme d'un logement s'étendant axialement vers l'aval dans l'anneau de retenue et configuré pour recevoir le premier organe, de préférence par emboîtement. De manière avantageuse, le premier organe et le deuxième organe coopèrent par complémentarité de formes pour faire une liaison à crabot.

De manière préférée, le deuxième organe possède une forme de U définissant deux branches latérales et une base. La concavité du U est orientée radialement vers l'intérieur de manière à permettre une dilatation de l'anneau de retenue radialement vers l'extérieur du fait des conditions thermiques.

De préférence, la virole intérieure comprend une partie aval qui comprend une première paroi radiale, une deuxième paroi radiale intérieure située en aval de la première paroi radiale et radialement intérieure à ladite première paroi radiale, et une troisième paroi axiale reliant la première paroi radiale et la deuxième paroi radiale. La première paroi radiale et la troisième paroi axiale forment ensemble une concavité dans laquelle est monté le premier organe. Par « radial » et « axial », on entend sensiblement radial et sensiblement axial.

De manière avantageuse, le montage du premier organe dans une concavité permet au premier organe d'être solidaire, d'une part, de la première paroi radiale et, d'autre part, de la troisième paroi axiale, ce qui augmente sa résistance mécanique. Cela est particulièrement avantageux pour résister à un effort tangentiel pour bloquer l'anneau de retenue.

Selon un aspect de l'invention, le premier organe comprend un volume médian définissant deux faces latérales configurées pour former des faces de butée tangentielle avec le deuxième organe. De préférence, les faces latérales sont planes pour améliorer la transmission des efforts en butée.

De manière préférée, l'anneau de retenue comprenant une couronne annulaire amont, le deuxième organe est formé dans la couronne annulaire. Ainsi, le deuxième organe est réalisé de manière pratique par simple découpe de la couronne annulaire. De préférence, la couronne annulaire s'étend transversalement à l'axe X. De préférence encore, les branches du U, dont le deuxième organe a la forme, s'étendent radialement en saillie vers l'intérieur par rapport à la couronne annulaire. Cela permet d'augmenter le contact tangentiel et donc la transmission des efforts de blocage.

De manière préférée, le premier organe et le carter intermédiaire forment un ensemble monobloc. De préférence, le premier organe est issu de matière de la virole intérieure, ce qui améliore la résistance mécanique et réduit le coût de fabrication.

De manière préférée, le deuxième organe et l'anneau de retenue forment un ensemble monobloc. De préférence, le deuxième organe est issu de matière de l'anneau de retenue, ce qui améliore la résistance mécanique et réduit le coût de fabrication.

De préférence, le compresseur comprend une pluralité de premiers organes, de préférence au moins 3, de préférence au plus 6. De préférence encore, le compresseur comprend une pluralité de deuxièmes organes de blocage, de préférence au moins 3, de préférence au plus 6. Cela permet avantageusement de répartir et de redonder le blocage tangentiel.

Selon un aspect de l'invention, le carter intermédiaire comprend une pluralité de bras de support s'étendant dans la veine primaire et reliant la virole intérieure et la virole extérieure. Au moins un premier organe est situé à la même position angulaire qu'un bras de support par rapport à l'axe X, de préférence chaque premier organe est situé à la même position angulaire qu'un bras de support par rapport à l'axe X.

De manière avantageuse, le premier organe est positionné à proximité d'un bras de support afin de bénéficier de sa robustesse et ainsi de mieux bloquer toute effort tangentiel. De plus, le voisinage du bras de support forme une réserve de matière dans laquelle un premier organe peut être formé sans contrainte.

Selon un aspect de l'invention, le deuxième organe comprend au moins une portion en saillie vers l'amont qui est décalée tangentiellement par rapport au premier organe et configurée pour former une butée tangentielle. Ainsi, le premier organe et le deuxième organe possèdent des formes analogues, ce qui facilite la conception. Une portion en saillie permet en outre d'améliorer la résistance mécanique.

De préférence, le premier organe est configuré pour coopérer tangentiellement avec deux deuxièmes organes, en particulier, un pour chaque sens de rotation autour de l'axe X.

L'invention concerne également un turbomoteur d'aéronef à double flux s'étendant longitudinalement selon un axe X orienté de l'amont vers l'aval et comprenant un compresseur, tel que présenté précédemment.

L'invention concerne en outre un procédé de montage d'un compresseur tel que décrit précédemment, au cours duquel l'anneau de retenue est monté axialement sur le carter intermédiaire de sorte que le premier organe et le deuxième organe coopèrent de manière à bloquer un déplacement tangentiel de l'anneau de retenue par rapport au carter intermédiaire selon l'axe X tout en autorisant un déplacement axial et un déplacement radial dudit anneau de retenue par rapport audit carter intermédiaire selon l'axe X.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique en coupe longitudinale d'un turbomoteur d'aéronef selon l'art antérieur ;
La figure 2 est une représentation schématique rapprochée du compresseur du turbomoteur d'aéronef de la figure 1 ;
La figure 3 est une représentation schématique en coupe longitudinale d'un turbomoteur d'aéronef selon l'invention ;
La figure 4 est une représentation schématique rapprochée en demi-coupe longitudinale du compresseur d'un turbomoteur d'aéronef comprenant le dispositif de blocage selon l'invention ;
La figure 5 est une représentation schématique en perspective depuis l'aval de la virole intérieure du carter intermédiaire ;
La figure 6 est une représentation schématique en perspective de l'anneau de retenue ;
La figure 7A est une représentation schématique en perspective rapprochée d'un premier organe ;
La figure 7B est une représentation schématique en coupe longitudinale d'un premier organe ;
La figure 8 est une représentation schématique rapprochée d'un deuxième organe ;
La figure 9A est une représentation schématique en perspective d'un premier organe et d'un deuxième organe en coopération ;
La figure 9B est une représentation schématique en coupe longitudinale rapprochée d'un premier organe et d'un deuxième organe en coopération et
La figure 10A et
La figure 10B sont des représentations schématiques en perspective d'un deuxième organe suivant une deuxième forme et une troisième forme de réalisation respectivement du dispositif de blocage selon l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

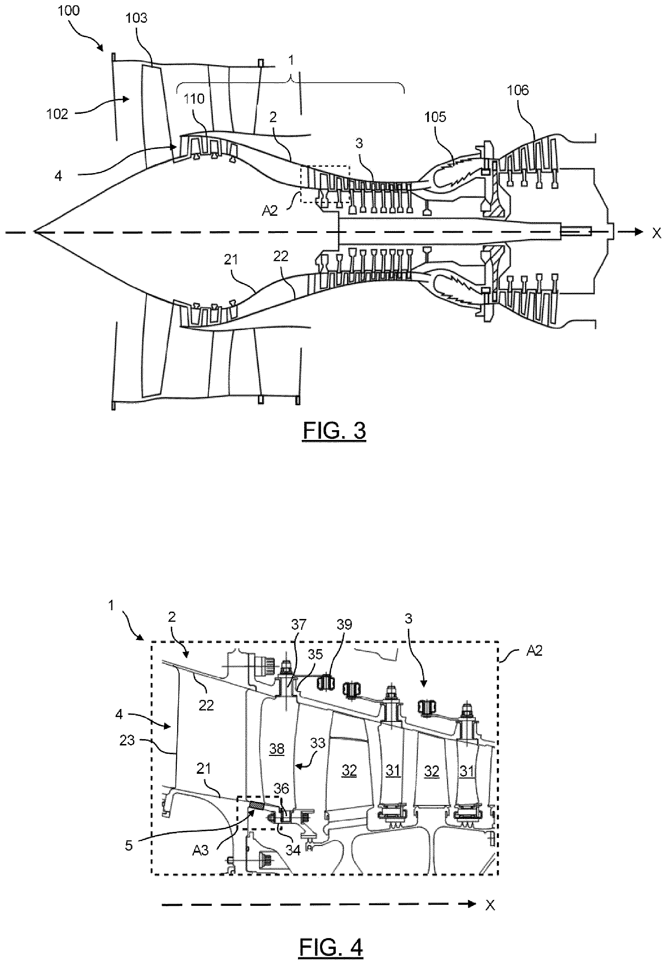

De manière connue, en référence à la figure 3, un turbomoteur 100 d'aéronef s'étend selon un axe longitudinal X et permet de propulser un aéronef à partir de l'accélération d'un flux d'air entrant dans le turbomoteur 100 et circulant d'amont en aval. Par la suite, les termes « amont » et « aval » sont définis par rapport à l'axe longitudinal X orienté d'amont en aval. De même, les termes « intérieur » et « extérieur » sont définis selon la direction radiale par rapport à l'axe longitudinal X.

De manière connue, en référence à la figure 3, un turbomoteur 100 d'aéronef à double flux comprend une veine primaire 4 radialement intérieure dans laquelle circule une première partie du flux d'air entrant, dite flux d'air primaire, et une veine secondaire 102 radialement extérieure dans laquelle circule une seconde partie du flux d'air entrant, dite flux d'air secondaire.

De manière connue, en référence à la figure 3, un turbomoteur 100 d'aéronef à double flux comprend d'amont en aval une entrée d'air comprenant une soufflante 103 pour diriger le flux d'air entrant vers la veine primaire 4 et la veine secondaire 102, un compresseur 1 pour compresser le flux d'air primaire, une chambre de combustion 105 et une turbine 106.

De manière connue, en référence à la figure 4 représentant une vue rapprochée A2 de la figure 3, le compresseur 1 comprend un compresseur basse pression 110 situé à l'amont, un compresseur haute pression 3 situé à l'aval et un carter intermédiaire 2 reliant axialement le compresseur basse pression 110 et le compresseur haute pression 3.

De manière connue, en référence à la figure 4, le carter intermédiaire 2 comprend une virole intérieure 21 délimitant intérieurement la veine primaire 4, une virole extérieure 22 délimitant extérieurement la veine primaire 4 et des bras de support 23 s'étendant entre la virole intérieure 21 et la virole extérieure 22.

De manière connue, en référence à la figure 4, le compresseur haute pression 3 comprend une alternance de stators 31, également nommés redresseurs, et de rotors 32 montés axialement selon l'axe X pour respectivement guider et accélérer le flux d'air primaire. Comme présenté précédemment, le stator situé le plus à l'amont du compresseur haute pression 3 est dénommé par la suite roue directrice d'entrée 33 et est connu de l'homme du métier sous son abréviation « RDE ». Le compresseur haute pression 3 comporte en outre un carter extérieur 35 délimitant extérieurement la veine primaire 4.

De manière connue, en référence à la figure 4, la roue directrice d'entrée 33 comprend un anneau de retenue 34 fixe d'axe X délimitant intérieurement la veine primaire 4 et une pluralité d'aubes 38 montées entre l'anneau de retenue 34 et le carter extérieur 35 du compresseur haute pression 3. Dans cet exemple, l'anneau de retenue 34 et le carter extérieur 35 comprennent respectivement une pluralité d'alvéoles intérieures 36 et une pluralité d'alvéoles extérieures 37, formées respectivement à leur périphérie extérieure, pour le montage des aubes 38. Dans cet exemple, la roue directrice d'entrée 33 comprend un système de calage des aubes 39 permettant d'adapter l'orientation des aubes 38 en fonction des conditions de vol.

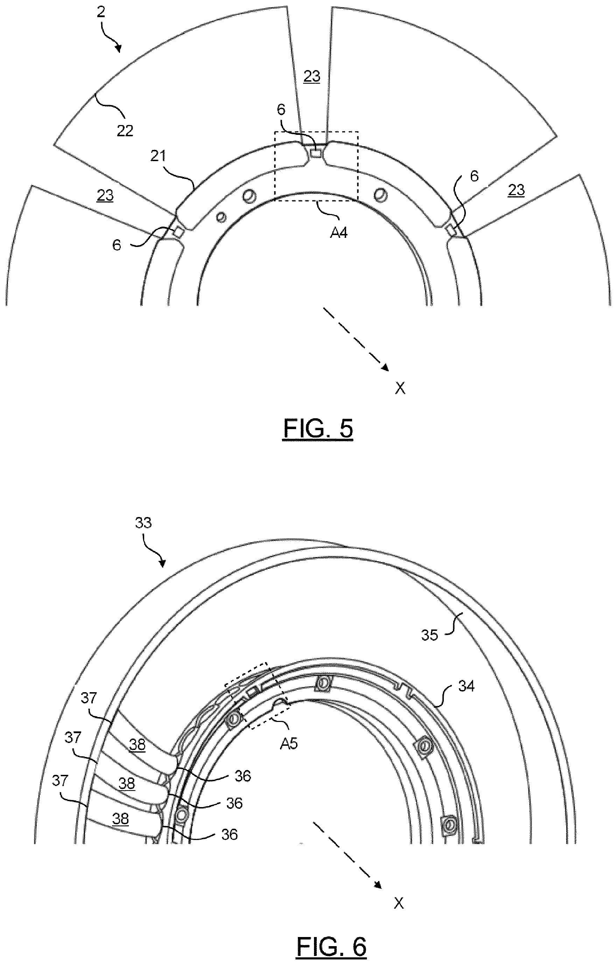

Selon l'invention, en référence à la figure 4, le compresseur 1 comprend un dispositif de blocage 5 entre l'anneau de retenue 34 et le carter intermédiaire 2. En référence aux figures 5 et 6, ce dispositif de blocage 5 comprend au moins un premier organe 6 solidaire du carter intermédiaire 2 et au moins un deuxième organe 7 solidaire de l'anneau de retenue 34. Selon l'invention, le deuxième organe 7 est configuré pour coopérer avec le premier organe 6 afin de bloquer un déplacement tangentiel de l'anneau de retenue 34 par rapport au carter intermédiaire 2 selon l'axe X tout en autorisant un déplacement axial et un déplacement radial dudit anneau de retenue 34 par rapport audit carter intermédiaire 2 selon l'axe X. Ce blocage tangentiel permet avantageusement, lors de l'ingestion de corps étrangers, tels qu'un oiseau, d'éviter de générer un moment mécanique autour de l'axe X sur l'anneau de retenue 34 de la roue directrice d'entrée 33 pouvant endommager les aubes 38. Les degrés de liberté radial et axial permettent quant à eux d'éviter de créer une liaison hyperstatique entre le carter intermédiaire 2 et la roue directrice d'entrée 33, et donc de préserver les performances du turbomoteur 100.

Selon un aspect de l'invention, comme illustré sur les figures 5 et 6, le dispositif de blocage 5 comprend une pluralité de premiers organes 6 et de deuxièmes organes 7. De préférence, le dispositif de blocage 5 comprend au moins trois premiers organes 6 pour assurer un blocage tangentiel efficace, réparti et redondé. De préférence également, le dispositif de blocage 5 comprend au plus six premiers organes 6 pour limiter l'encombrement, comme illustré dans l'exemple de la figure 5. De manière analogue, le dispositif de blocage 5 comprend au moins trois deuxièmes organes 7 et au plus six deuxièmes organes 7.

De préférence également, le dispositif de blocage 5 comprend autant de deuxièmes organes 7 que de premiers organes 6, tel que dans l'exemple des figures 5 et 6, de sorte que chaque premier organe 6 coopère avec un deuxième organe 7, deux à deux. Il va cependant de soi que le nombre de premiers organes 6 et le nombre de deuxièmes organes 7 pourraient être différents.

On décrit par la suite les caractéristiques structurelles d'un premier organe 6 et d'un deuxième organe 7 successivement avant de décrire leur coopération.

Dans cette forme de réalisation, tous les premiers organes 6 sont identiques. Aussi, par souci de clarté et de concision, seul un premier organe 6 va être dorénavant décrit.

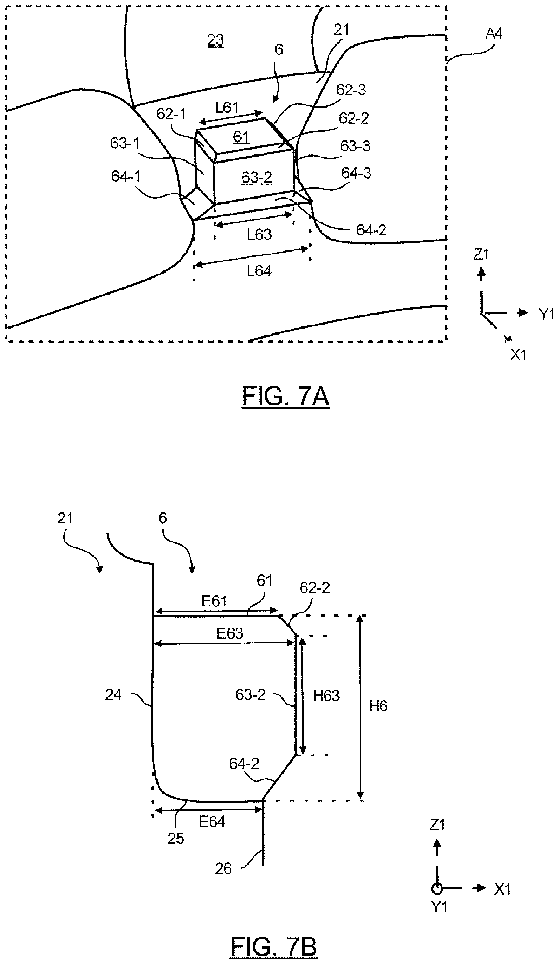

Selon un aspect de l'invention, comme représenté sur la figure 7A représentant une vue rapprochée A4 de la figure 5, chaque premier organe 6 est solidaire de la virole intérieure 21 du carter intermédiaire 2. En particulier, chaque premier organe 6 est fixé à une partie aval de la virole intérieure 21.

En référence à la figure 7B, la partie aval de la virole intérieure 21 comprend une première paroi radiale 24, une deuxième paroi radiale intérieure 26 située en aval de la première paroi radiale 24 et radialement intérieure à ladite première paroi radiale 24 ainsi qu'une troisième paroi axiale 25 reliant la première paroi radiale 24 et la deuxième paroi radiale 26 de manière à former une concavité. Dans cet exemple, le premier organe 6 est monté dans la concavité et est solidaire, d'une part, de la première paroi radiale 24 et, d'autre part, de la troisième paroi axiale 25.

Comme illustré à la figure 7B, le premier organe 6 s'étend axialement en saillie vers l'aval par rapport à la deuxième paroi radiale 26. Le dispositif de blocage 5 est ainsi localisé axialement entre l'anneau de retenue 34 et la virole intérieure 21 et présente un faible encombrement.

Selon un autre aspect de l'invention, comme illustré sur les figures 5 et 7A, le premier organe 6 est situé à la même position angulaire qu'un bras de support 23, pour limiter l'encombrement. Les parois 24, 25, 26 ne sont pas annulaires mais forment des segments radiaux qui sont positionnés angulairement aux positions des bras de support 23. Dans l'exemple de la figure 5, les six premiers organes 6 sont ainsi situés à la même position angulaire qu'un bras de support 23. De manière avantageuse, on tire avantage du renforcement de la virole intérieure 21 au niveau des bras de support 23 pour former les premiers organes 6. Les premiers organes 6 possèdent ainsi une structure robuste comme cela sera présenté par la suite. Ils peuvent ainsi absorber tout choc ou déplacement tangentiel de l'anneau de retenue 34.

Il va cependant de soi que seule une partie des premiers organes 6 peut être située à la même position angulaire qu'un bras de support 23, voire que les premiers organes 6 pourraient être situés à une position angulaire différente suivant les emplacements disponibles sur la virole intérieure 21.

Selon un aspect de l'invention, comme illustré sur les figures 7A et 7B, le premier organe 6 comprend une face aval 63-2, située en aval de la première paroi aval radiale 24 de la virole intérieure 21. De préférence, la face aval 63-2 est parallèle à ladite première paroi radiale 24. Le premier organe 6 comprend en outre des faces latérales 63-1, 63-3 reliant la face aval 63-2 et la première paroi radiale 24 de manière à ce que la section radiale du premier organe 6 soit sensiblement rectangulaire. La face aval 63-2 et les faces latérales 63-1, 63-3 délimitent ensemble un volume médian, s'étendant axialement en saillie vers l'aval depuis la première paroi radiale 24 et radialement en saillie vers l'extérieur depuis la troisième paroi axiale 25. Ce volume médian permet avantageusement de créer un blocage tangentiel par coopération avec le deuxième organe 7, tout en autorisant un déplacement radial et axial. En particulier, les faces latérales 63-1, 63-3 forment des faces de butée tangentielle comme cela sera présenté par la suite.

Selon un autre aspect de l'invention, comme illustré sur les figures 7A et 7B, le premier organe 6 comprend un volume de pied qui est radialement intérieur au volume médian et un volume de tête qui est radialement extérieur au volume médiane. En particulier, le volume de pied est situé entre le volume médian et la troisième paroi axiale 25 de la virole intérieure 21.

De préférence, comme illustré sur les figures 7A et 7B, le volume médian se présente sous la forme d'un parallélépipède rectangle dans le plan orthogonal X1, Y1, Z1, où X1 désigne la direction axiale parallèle à l'axe X, Y1 la direction tangentielle par rapport à l'axe X et Z1 la direction radiale par rapport à l'axe X. De préférence, la hauteur radiale H63 du volume médian est suffisamment grande pour une coopération optimale entre le premier organe 6 et le deuxième organe 7 et suffisamment petite pour limiter l'encombrement. De manière analogue, la longueur tangentielle L63 et/ou l'épaisseur axiale E63 sont suffisamment grandes pour une coopération optimale entre le premier organe 6 et le deuxième organe 7 et suffisamment petites pour limiter l'encombrement.

Comme illustré sur les figures 7A et 7B, le premier organe 6 comprend une face aval de pied 64-2 reliant la face aval 63-2 et la deuxième paroi radiale 26 ainsi que deux faces latérales de pied 64-1, 64-3 reliant les faces latérales 63-1, 63-3 et la troisième paroi axiale 25. La face aval de pied 64-2 et les faces latérales de pied 64-1, 64-3 délimitent ensemble le volume de pied, en coopération avec la première paroi radiale 24 et la troisième paroi axiale 25.

De préférence, la longueur tangentielle de pied L64 séparant les deux faces latérales de pied 64-1, 64-3 au niveau de la paroi aval axiale 25 est supérieure à la longueur tangentielle L63, de manière à ce que le volume de pied ait une section importante de contact avec la troisième paroi axiale 25, ce qui améliore la résistance mécanique en cisaillement. Autrement dit, les faces latérales de pied 64-1, 64-3 sont obliques par rapport à la direction radiale Z1 formant des biseaux dans le volume de pied. Ces biseaux présentent l'avantage d'éviter de former un angle droit entre les faces latérales 63-1, 63-3 et les faces latérales de pied 64-1, 64-3, ce qui évite l'apparition de criques et de microfissures locales.

De préférence également, l'épaisseur axiale de pied E64 séparant la face aval de pied 64-2 de la première paroi aval radiale 24 au niveau de la paroi aval radiale 25 est inférieure à l'épaisseur axiale E63, de manière à ce que le volume médian s'étende en saillie axialement vers l'aval. Autrement dit, la face aval de pied 64-2 est oblique par rapport à la direction radiale Z1, de manière à éviter de former un angle droit entre la face aval 63-2 et la face aval de pied 64-2, ce qui évite l'apparition de criques et de microfissures locales.

Comme illustré sur les figures 7A et 7B, le premier organe 6 comprend par ailleurs une face extérieure 61, une face aval de tête 62-2 reliant la face aval 63-2 et la face extérieure 61 ainsi que deux faces latérales de tête 62-1, 62-3 reliant les faces latérales 63-1, 63-3 et la face extérieure 61. La face extérieure 61, la face aval de tête 63-2 et les faces latérales de tête 63-1, 63-3 délimitent ensemble le volume de tête, en coopération avec la première paroi radiale 24.

De préférence, la section du volume de tête du premier organe 6 est plus faible que celle du volume médian de manière à faciliter la coopération avec le deuxième organe 7, en particulier, lors de déplacements relatifs selon la direction radiale. Dans cet exemple, la longueur tangentielle de tête L61 de la face extérieure 61 est inférieure à la longueur tangentielle L63. Autrement dit, les faces latérales de tête 62-1, 62-3 sont obliques par rapport à la direction radiale Z1 formant des biseaux dans le volume de tête. Ces biseaux présentent l'avantage de faciliter la coopération entre le premier organe 6 et le deuxième organe 7 ainsi que d'éviter de former un angle droit entre les faces latérales 63-1, 63-3 et les faces latérales de tête 62-1, 62-3, ce qui évite l'apparition de criques et de microfissures locales.

De préférence également, l'épaisseur axiale de tête E61 de la face extérieure 61 est inférieure à l'épaisseur axiale E63, de manière à ce que le volume médian s'étende en saillie axialement vers l'aval. Autrement dit, la face aval de tête 62-2 est oblique par rapport à la direction radiale Z1.

Selon un aspect préféré de l'invention, chaque premier organe 6 forme un ensemble monobloc avec la virole intérieure 21 du carter intermédiaire 2. Autrement dit, chaque premier organe 6 est issu de matière de la virole intérieure 21 du carter intermédiaire 2, ce qui confère au premier organe 6 une résistance mécanique accrue. Il va cependant de soi que le premier organe 6 pourrait être indépendant du carter intermédiaire 2 et monté de manière rapportée. Le premier organe 6 pourrait également être réalisé dans un matériau différent de celui du carter intermédiaire 2.

On décrit par la suite les caractéristiques structurelles du deuxième organe 7 avant de décrire sa coopération avec le premier organe 6.

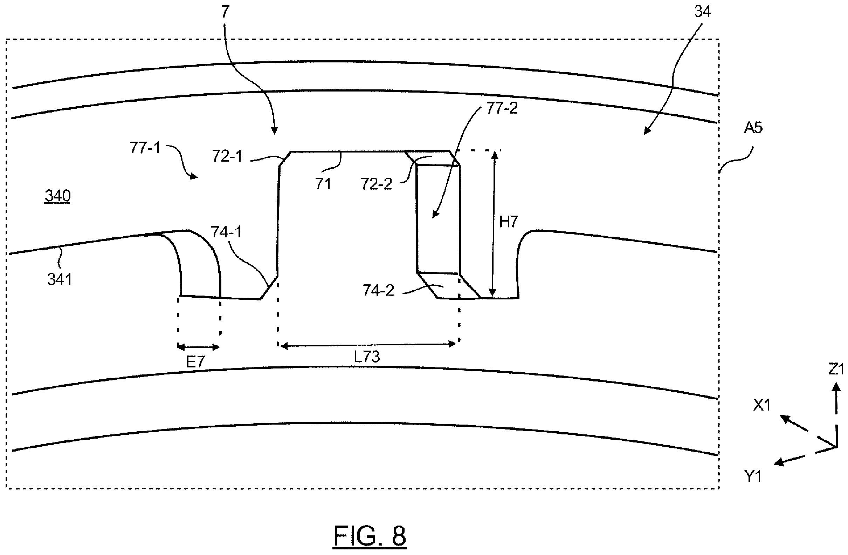

Selon une première forme de réalisation, en référence à la figure 8 représentant une vue rapprochée A5 de la figure 6, le deuxième organe s'étend dans un plan transversal à l'axe X. De manière préférée, le deuxième organe 7 possède une forme de U définissant deux branches latérales 77-1, 77-2 et une base 71. La concavité du U est orientée radialement vers l'intérieur de manière à permettre une dilatation de l'anneau de retenue 34 radialement vers l'extérieur du fait des conditions thermiques.

Comme représenté sur la figure 8, l'anneau de retenue 34 comporte une couronne annulaire amont 340 et le deuxième organe 7 est formé dans la couronne annulaire amont 340. La couronne annulaire amont 340 s'étend transversalement à l'axe X comme illustré à la figure 8. Selon cette forme de réalisation, le deuxième organe 7 se présente sous la forme d'un logement formé dans la couronne annulaire amont 340. De préférence, les branches 77-1, 77-2 s'étendent en saillie du bord intérieur 341 de la couronne annulaire amont 340 pour faciliter la coopération avec le premier organe 6 et améliorer le blocage tangentiel.

Dans cet exemple, le deuxième organe 7 forme un ensemble monobloc avec l'anneau de retenue 34. Autrement dit, le deuxième organe 7 est issu de la matière de l'anneau de retenue 34, ce qui confère au deuxième organe 7 une résistance mécanique accrue. Il va de soi que le deuxième organe 7 pourrait être indépendant de l'anneau de retenue 34. Le deuxième organe 7 pourrait également être dans un matériau différent de celui de l'anneau de retenue 34.

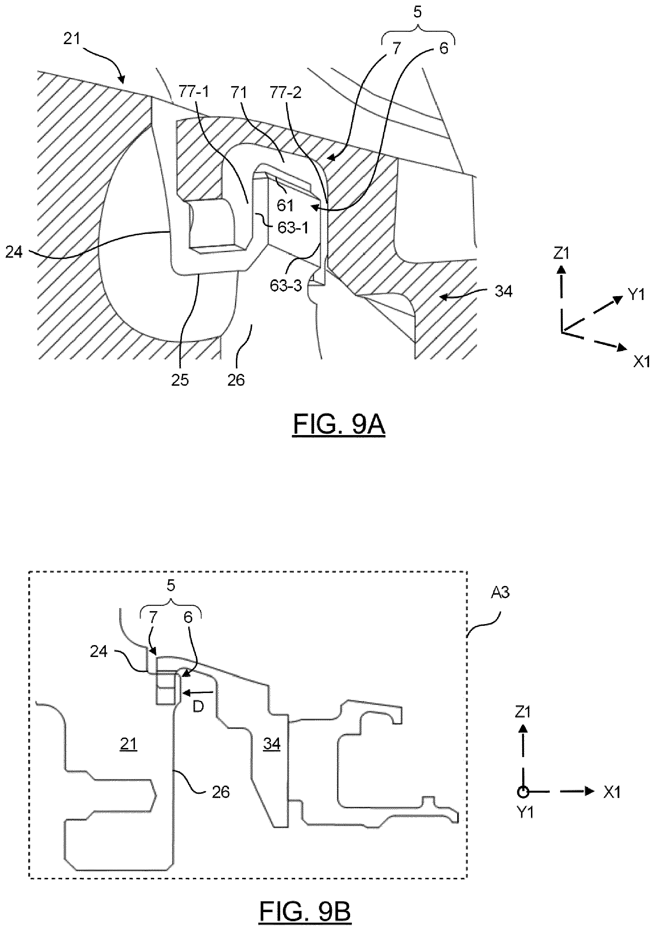

Comme illustré sur la figure 9A, le deuxième organe 7 est configuré pour recevoir le premier organe 6 par emboîtement du premier organe 6 dans le logement formé par le deuxième organe 7. Autrement dit, la base 71 est configurée pour coopérer avec la face extérieure 61 du premier organe 6. De plus, les branches latérales 77-1, 77-2 du deuxième organe 7 sont configurées pour coopérer avec les faces latérales 63-1, 63-3 du premier organe 6 de manière à bloquer tout déplacement tangentiel. A l'inverse, l'anneau de retenue 34 est libre de se dilater radialement et de se déplacer axialement par rapport à la virole intérieure 21 du carter intermédiaire 2. Il n'existe avantageusement pas de liaison hyperstatique.

De préférence, comme illustré sur les figures 8 et 9A, le deuxième organe 7 a une hauteur radiale totale H7 sensiblement égale à la hauteur radiale totale H6 du premier organe 6. Par ailleurs, le deuxième organe 7 a une largeur tangentielle L73 définie comme la longueur tangentielle séparant les deux branches 77-1, 77-2 sensiblement égale à la longueur tangentielle L63 du premier organe 6. En outre, le deuxième organe 7 a une épaisseur axiale E7 de préférence inférieure à l'épaisseur axiale E63 du premier organe 6, de préférence égale à l'épaisseur axiale de pied E64 du premier organe 6, de sorte à permettre un emboîtement total dans la direction axiale X1 du premier organe 6 avec le deuxième organe 7. Une telle liaison par emboîtement est également connue sous le nom de crabot.

De préférence, comme illustré sur les figures 8 et 9A, le deuxième organe 7 comprend des faces biseautées 72-1, 72-2 reliant la base 71 aux branches latérales 77-1, 77-2, configurées pour coopérer avec les faces latérales de tête 62-1, 62-3 du premier organe 6. Cela permet ainsi un centrage radial du premier organe 6 vis-à-vis du deuxième organe 7 lors de déplacements radiaux.

De préférence également, le deuxième organe 7 comprend des faces biseautées 74-1, 74-2 à l'extrémité intérieure des branches 77-1, 77-2 qui sont configurées pour coopérer avec les faces latérales de pied 64-1, 64-3 du premier organe 6.

En référence à la figure 9B représentant une vue rapprochée A3 de la figure 4, pour monter le compresseur 1 précédemment présenté, la roue directrice d'entrée 33 du compresseur haute pression 3 est montée axialement sur le carter intermédiaire 2 de sorte que chaque premier organe 6 soit inséré axialement par déplacement axial D dans chaque deuxième organe 7 entre les branches 77-1, 77-2. Suite au montage, l'anneau de retenue 34 ne peut pas tourner autour de l'axe X mais reste libre de se déplacer axialement selon l'axe X ou de se dilater radialement.

En cas d'ingestion d'un corps étranger, tel qu'un oiseau, celui-ci peut heurter l'anneau de retenue 34 qui transmet les efforts mécaniques à la virole intérieure 21 grâce au dispositif de blocage 5. Autrement dit, l'anneau de retenue 34 ne se déplace pas tangentiellement, ce qui évite toute perte d'aube 38.

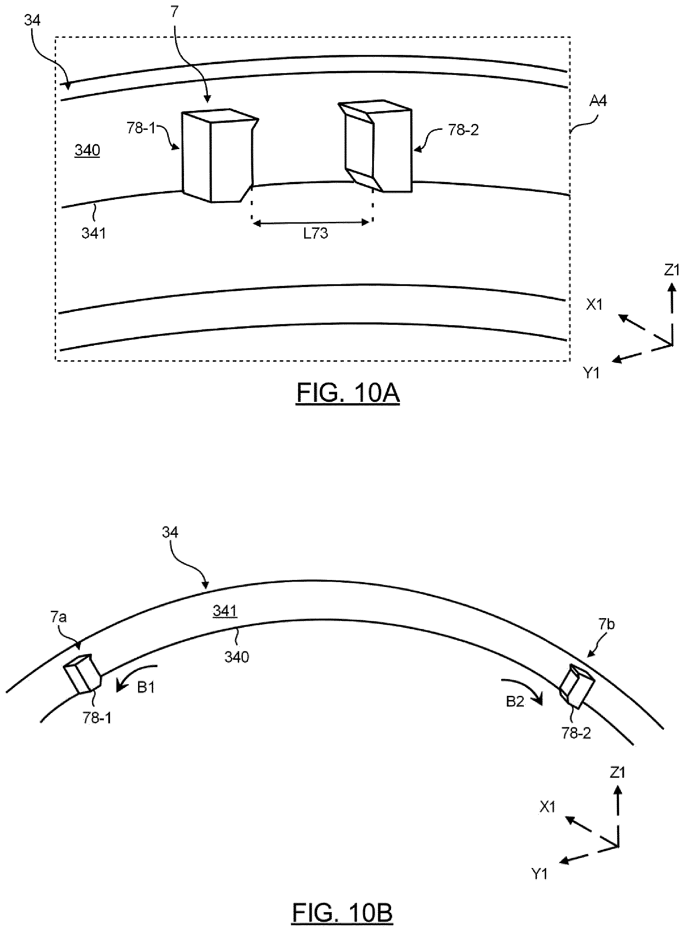

On décrit par la suite deux autres formes de réalisation du deuxième organe 7, en référence aux figures 10A et 10B.

Selon une autre forme de réalisation de l'invention, comme illustré sur la figure 10A, le deuxième organe 7 comprend deux portions 78-1, 78-2 s'étendant axialement en saillie vers l'amont depuis l'anneau de retenue 34, en particulier, depuis la couronne annulaire amont 340. De préférence également, les portions 78-1, 78-2 sont séparées au moins l'une de l'autre de la longueur tangentielle L73. Autrement dit, l'espace tangentiel formé entre les portions 78-1, 78-2 définit un logement pour recevoir le premier organe 6.

Selon un aspect de l'invention, les deux portions 78-1, 78-2 sont configurées pour s'étendre de part et d'autre tangentiellement du premier organe 6, de manière à former une butée tangentielle pour le premier organe 6 dans chaque sens de rotation autour de l'axe X (butée bidirectionnelle).

Selon une autre forme de réalisation de l'invention, le deuxième organe 7 comprend une unique portion 78-1, 78-2, configuré pour s'étendre tangentiellement d'un unique côté du premier organe 6. Ce deuxième organe 7 forme ainsi une butée tangentielle unidirectionnelle pour le premier organe 6, le premier organe 6 étant bloqué tangentiellement selon un unique sens de rotation. Comme illustré sur la figure 10B, le dispositif de blocage 5 comprend au moins deux deuxièmes organes 7 pour permettre un blocage tangentiel bidirectionnel. Comme illustré sur la figure 10B, un deuxième organe 7a est configuré pour stopper un mouvement selon le premier sens de rotation B1 par coopération avec un premier organe 6 (non représenté). Un autre deuxième organe 7b est configuré pour stopper un mouvement selon le deuxième sens de rotation B2 par coopération avec un autre premier organe 6 (non représenté). Le blocage est ainsi bidirectionnel.

Grâce au dispositif de blocage du compresseur selon l'invention, les aubes 38 de la roue directrice d'entrée 33 sont protégées lors de l'ingestion de corps étrangers dans le compresseur 1. Plus précisément, le dispositif de blocage 5 bloque tangentiellement la roue directrice d'entrée 33 par rapport au carter intermédiaire 2 ce qui permet d'éviter l'apparition d'un moment mécanique autour de l'axe X lorsque le corps étranger percute la roue directrice d'entrée 33. Ce dispositif de blocage 5 est par ailleurs non encombrant et ne nécessite pas de modifier la structure globale de la roue directrice d'entrée 33 et du carter intermédiaire 2. La chaîne de montage existante de la roue directrice d'entrée 33 et du carter intermédiaire 2 peuvent donc être avantageusement conservées. En outre, le dispositif de blocage 5 autorise un déplacement axial et radial de la roue directrice d'entrée 33 par rapport au carter intermédiaire 2, ce qui permet de ne pas réduire les performances du turbomoteur 100 par frottement.

## Revendications

1. Compresseur (1) de turbomoteur (100) d'aéronef à double flux s'étendant longitudinalement selon un axe X orienté de l'amont vers l'aval, ledit compresseur (1) comprenant un compresseur basse pression (110) situé en amont, un compresseur haute pression (3) situé en aval et un carter intermédiaire (2) reliant axialement le compresseur basse pression (110) et le compresseur haute pression (3), ledit compresseur (1) comprenant une veine primaire (4) dans laquelle circule d'amont en aval un flux d'air primaire accéléré par ledit compresseur (1), ledit compresseur haute pression (3) comprenant une roue directrice d'entrée (33) comprenant un anneau de retenue (34) délimitant intérieurement la veine primaire (4), un carter extérieur de compresseur haute pression (35) délimitant extérieurement ladite veine primaire (4) et une pluralité d'aubes (38) s'étendant dans ladite veine primaire (4) entre l'anneau de retenue (34) et le carter extérieur de compresseur haute pression (35), le carter intermédiaire (2) comprenant une virole intérieure (21) délimitant intérieurement la veine primaire (4) et une virole extérieure (22) délimitant extérieurement ladite veine primaire (4) et reliée au carter extérieur de compresseur haute pression (35), compresseur **caractérisé par le fait qu'**il comprend un dispositif de blocage (5) comprenant :
- au moins un premier organe (6) solidaire de la virole intérieure (21) du carter intermédiaire (2) et
- au moins un deuxième organe (7) solidaire de l'anneau de retenue (34) et configuré pour coopérer avec le premier organe (6) afin de bloquer un déplacement tangentiel de l'anneau de retenue (34) par rapport au carter intermédiaire (2) selon l'axe X tout en autorisant un déplacement axial et un déplacement radial dudit anneau de retenue (34) par rapport audit carter intermédiaire (2) selon l'axe X.

2. Compresseur (1) selon la revendication 1, dans lequel, la virole intérieure (21) comprenant une partie aval qui comprend une première paroi radiale (24), une deuxième paroi radiale intérieure (26) située en aval de la première paroi radiale (24) et radialement intérieure à ladite première paroi radiale (24), et une troisième paroi axiale (25) reliant la première paroi radiale (24) et la deuxième paroi radiale (26), la première paroi radiale (24) et la troisième paroi axiale (25) forment ensemble une concavité dans laquelle est monté le premier organe (6).

3. Compresseur (1), selon l'une des revendications 1 et 2, le carter intermédiaire (2) comprenant une pluralité de bras de support (23) s'étendant dans la veine primaire (4) et reliant la virole intérieure (21) et la virole extérieure (22), compresseur (1) dans lequel au moins un premier organe (6) est situé à la même position angulaire qu'un bras de support (23) par rapport à l'axe X, de préférence chaque premier organe (6) est situé à la même position angulaire qu'un bras de support (23) par rapport à l'axe X.

4. Compresseur (1) selon l'une des revendications 1 à 3, dans lequel le premier organe (6) s'étend longitudinalement par rapport à l'axe X en saillie vers l'aval.

5. Compresseur (1), selon l'une des revendications 1 à 4, dans lequel le deuxième organe (7) se présente sous la forme d'un logement s'étendant axialement vers l'aval dans l'anneau de retenue (34) et configuré pour recevoir le premier organe (6), de préférence par emboîtement.

6. Compresseur (1) selon l'une des revendications 1 à 5, dans lequel le deuxième organe (7) possède une forme de U définissant deux branches latérales et une base, la concavité du U étant orientée radialement vers l'intérieur.

7. Compresseur (1) selon l'une des revendications 1 à 6, dans lequel le premier organe (6) comprend un volume médian définissant deux faces latérales configurées pour former des faces de butée tangentielle avec le deuxième organe (7).

8. Compresseur (1) selon l'une des revendications 1 à 7, dans lequel l'anneau de retenue (34) comprenant une couronne annulaire amont (340), le deuxième organe (7) est formé dans la couronne annulaire amont (340).

9. Compresseur (1) selon l'une des revendications 1 à 8, dans lequel le premier organe (6) et la virole intérieure (21) forment un ensemble monobloc.

10. Compresseur (1) selon l'une des revendications 1 à 9, comprenant une pluralité de premiers organes (6), de préférence au moins 3, de préférence au plus 6.

11. Compresseur (1) selon l'une des revendications 1 et 4, dans lequel le deuxième organe (7) comprend au moins une portion en saillie (78-1) vers l'amont qui est décalée tangentiellement par rapport au premier organe (6) et configurée pour former une butée tangentielle.

12. Procédé de montage du compresseur (1) selon l'une des revendications 1 à 11, au cours duquel l'anneau de retenue (34) est monté axialement sur le carter intermédiaire (2) de sorte que le premier organe (6) et le deuxième organe (7) coopèrent de manière à bloquer un déplacement tangentiel de l'anneau de retenue (34) par rapport au carter intermédiaire (2) selon l'axe X tout en autorisant un déplacement axial et un déplacement radial dudit anneau de retenue (34) par rapport audit carter intermédiaire (2) selon l'axe X.

## Patentansprüche

1. Kompressor (1) eines Flugzeug-Doppelstromtriebwerks (100), der sich längs gemäß einer Achse X erstreckt, die von stromaufwärts nach stromabwärts ausgerichtet ist, wobei der Kompressor (1) einen Niederdruckkompressor (110) umfasst, der sich stromaufwärts befindet, einen Hochdruckkompressor (3), der sich stromabwärts befindet und ein Zwischengehäuse (2), das den Niederdruckkompressor (110) und den Hochdruckkompressor (3) axial verbindet, wobei der Kompressor (1) einen primären Kanal (4) umfasst, in dem von stromaufwärts nach stromabwärts ein primärer Luftstrom zirkuliert, der von dem Kompressor (1) beschleunigt wird, wobei der Hochdruckkompressor (3) ein Leitschaufelrad (33) umfasst, das einen Haltering (34) umfasst, der den primären Kanal (4) innen begrenzt, ein Hochdruckkompressor-Außengehäuse (35), das den primären Kanal (4) außen begrenzt und eine Vielzahl von Schaufeln (38), die sich in dem primären Kanal (4) zwischen dem Haltering (34) und dem Hochdruckkompressor-Außengehäuse (35) erstrecken, wobei das Zwischengehäuse (2) einen inneren Mantel (21) umfasst, der den primären Kanal (4) innen begrenzt, und einen äußeren Mantel (22), der den primären Kanal (4) außen begrenzt und mit dem Hochdruckkompressor-Außengehäuse (35) verbunden ist, wobei der Kompressor **dadurch gekennzeichnet ist, dass** er eine Blockiervorrichtung (5) umfasst, die umfasst:
- mindestens ein erstes Organ (6), das mit dem inneren Mantel (21) des Zwischengehäuses (2) fest verbunden ist, und
- mindestens ein zweites Organ (7), das mit dem Haltering (34) fest verbunden ist und zum Zusammenwirken mit dem ersten Organ (6) ausgelegt ist, um eine tangentiale Verlagerung des Halterings (34) im Verhältnis zum Zwischengehäuse (2) gemäß der Achse X bei gleichzeitiger Gestattung einer axialen Verlagerung und einer radialen Verlagerung des Halterings (34) im Verhältnis zum Zwischengehäuse (2) gemäß der Achse X zu blockieren.

2. Kompressor (1) nach Anspruch 1, wobei, wobei der innere Mantel (21) einen stromabwärtigen Teil umfasst, der eine erste radiale Wand (24), eine zweite radiale Innenwand (26), die sich stromabwärts von der ersten radialen Wand (24) und radial innen zu der ersten radialen Wand (24) befindet, und eine dritte axiale Wand (25), die die erste radiale Wand (24) und die zweite radiale Wand (26) verbindet, die erste radiale Wand (24) und die dritte axiale Wand (25) gemeinsam eine Konkavität bilden, in der das erste Organ (6) angebracht ist.

3. Kompressor (1) nach einem der Ansprüche 1 und 2, wobei das Zwischengehäuse (2) eine Vielzahl von Stützarmen (23) umfasst, die sich im primären Kanal (4) erstrecken und den inneren Mantel (21) und den äußeren Mantel (22) verbinden, wobei sich in dem Kompressor (1) mindestens ein erstes Organ (6) an derselben Winkelposition wie ein Stützarm (23) im Verhältnis zur Achse X, vorzugsweise jedes erste Organ (6) an derselben Winkelposition wie ein Stützarm (23) im Verhältnis zur Achse X befindet.

4. Kompressor (1) nach einem der Ansprüche 1 bis 3, wobei sich das erste Organ (6) längs im Verhältnis zur Achse X hervorstehend nach stromabwärts erstreckt.

5. Kompressor (1) nach einem der Ansprüche 1 bis 4, wobei das zweite Organ (7) in Form einer Aufnahme vorliegt, die sich axial nach stromabwärts im Haltering (34) erstreckt und zum Empfang des ersten Organs (6), vorzugsweise durch Rasten, ausgelegt ist.

6. Kompressor (1) nach einem der Ansprüche 1 bis 5, wobei das zweite Organ (7) eine Form eines U besitzt, das zwei seitliche Schenkel und eine Basis definiert, wobei die Konkavität des U radial nach innen ausgerichtet ist.

7. Kompressor (1) nach einem der Ansprüche 1 bis 6, wobei das erste Organ (6) ein mittleres Volumen umfasst, das zwei seitliche Flächen definiert, die dazu ausgelegt sind, mit dem zweiten Organ (7) Tangentialanschlagflächen zu bilden.

8. Kompressor (1) nach einem der Ansprüche 1 bis 7, wobei der Haltering (34) einen stromaufwärtigen ringförmigen Kranz (340) umfasst, wobei das zweite Organ (7) in dem stromaufwärtigen ringförmigen Kranz (340) ausgebildet ist.

9. Kompressor (1) nach einem der Ansprüche 1 bis 8, wobei das erste Organ (6) und der innere Mantel (21) eine einteilige Anordnung bilden.

10. Kompressor (1) nach einem der Ansprüche 1 bis 9, umfassend eine Vielzahl erster Organe (6), vorzugsweise mindestens 3, vorzugsweise höchstens 6.

11. Kompressor (1) nach einem der Ansprüche 1 und 4, wobei das zweite Organ (7) mindestens einen nach stromaufwärts hervorstehenden Abschnitt (78-1) umfasst, der im Verhältnis zum ersten Organ (6) tangential versetzt und dazu ausgelegt ist, einen Tangentialanschlag zu bilden.

12. Verfahren zur Montage des Kompressors (1) nach einem der Ansprüche 1 bis 11, bei dem der Haltering (34) auf dem Zwischengehäuse (2) derart axial angebracht ist, dass das erste Organ (6) und das zweite Organ (7) derart zusammenwirken, dass eine tangentiale Verlagerung des Halterings (34) im Verhältnis zum Zwischengehäuse (2) gemäß der Achse X bei gleichzeitiger Gestattung einer axialen Verlagerung und einer radialen Verlagerung des Halterings (34) im Verhältnis zum Zwischengehäuse (2) gemäß der Achse X blockiert wird.

## Claims

1. A compressor (1) for an aircraft dual-flow turboshaft engine (100) longitudinally extending along an axis X oriented from upstream to downstream, said compressor (1) comprising a low pressure compressor (110) located upstream, a high pressure compressor (3) located downstream and an intermediate casing (2) axially connecting the low pressure compressor (110) and the high pressure compressor (3), said compressor (1) comprising a primary vein (4) in which a primary air flow accelerated by said compressor (1) circulates from upstream to downstream, said high pressure compressor (3) comprising an inlet guide vane assembly (33) comprising a retaining ring (34) internally delimiting the primary vein (4), an external high pressure compressor casing (35) externally delimiting said primary vein (4) and a plurality of vanes (38) extending into said primary vein (4) between the retaining ring (34) and the external high pressure compressor casing (35), the intermediate casing (2) comprising an internal shell (21) internally delimiting the primary vein (4) and an external shell (22) externally delimiting said primary vein (4) and connected to the external high pressure compressor casing (35), which compressor is **characterized in that** it comprises a blocking device (5) comprising:
- at least a first member (6) integral with the internal shell (21) of the intermediate casing (2) and
- at least a second member (7) integral with the retaining ring (34) and configured to cooperate with the first member (6) in order to block a tangential movement of the retaining ring (34) with respect to the intermediate casing (2) along the axis X while allowing axial movement and radial movement of said retaining ring (34) with respect to said intermediate casing (2) along the axis X.

2. The compressor (1) according to claim 1, wherein, with the internal shell (21) comprising a downstream part which comprises a first radial wall (24), an internal second radial wall (26) located downstream of the first radial wall (24) and radially internal to said first radial wall (24), and a third axial wall (25) connecting the first radial wall (24) and the second radial wall (26), the first radial wall (24) and the third axial wall (25) together form a concavity in which the first member (6) is mounted.

3. The compressor (1), according to one of claims 1 and 2, the intermediate casing (2) comprising a plurality of support arms (23) extending into the primary vein (4) and connecting the internal shell (21) and the external shell (22), the compressor (1) wherein at least a first member (6) is located at the same angular position as a support arm (23) with respect to the axis X, preferably each first member (6) is located at the same angular position as a support arm (23) with respect to the axis X.

4. The compressor (1) according to one of claims 1 to 3, wherein the first member (6) longitudinally extends with respect to the downstream protruding axis X.

5. The compressor (1) according to one of claims 1 to 4, wherein the second member (7) is in the form of a housing extending axially downstream in the retaining ring (34) and configured to receive the first member (6), preferably by interlocking.

6. The compressor (1) according to one of claims 1 to 5, wherein the second member (7) has a U-shape defining two side legs and a base, the concavity of the U being radially inwardly oriented.

7. The compressor (1) according to one of claims 1 to 6, wherein the first member (6) comprises a median volume defining two side faces configured to form tangential stop faces with the second member (7).

8. The compressor (1) according to one of claims 1 to 7, wherein the retaining ring (34) comprises an upstream annular ring (340), the second member (7) is formed in the upstream annular ring (340).

9. The compressor (1) according to one of claims 1 to 8, wherein the first member (6) and the internal shell (21) form a one-piece assembly.

10. The compressor (1) according to one of claims 1 to 9, comprising a plurality of first members (6), preferably at least 3, preferably at most 6.

11. The compressor (1) according to one of claims 1 and 4, wherein the second member (7) comprises at least one upstream protruding portion (78-1) which is tangentially offset from the first member (6) and configured to form a tangential stop.

12. A method for mounting the compressor (1) according to one of claims 1 to 11, wherein the retaining ring (34) is axially mounted to the intermediate casing (2) such that the first member (6) and the second member (7) cooperate so as to block tangential movement of the retaining ring (34) with respect to the intermediate casing (2) along the axis X while allowing axial movement and radial movement of said retaining ring (34) with respect to said intermediate casing (2) along the axis X.
